# EUROPÄISCHE PATENTSCHRIFT

(11) **EP 0 770 815 B1**
(45) Veröffentlichungstag und Bekanntmachung des Hinweises auf die Patenterteilung: **20.11.2002**
(21) Anmeldenummer: 96117133.7
(22) Anmeldetag: 25.10.1996
(51) Int. Cl.: F17C 5/06, B60S 5/02, F17C 13/02

(54) **Messsystem für eine Erdgastankstelle**
Measuring system for a natural gas filling station
Système de mesure pour un distributeur de gas naturel

(30) Priorität: 27.10.1995 DE 29516989 U
(43) Veröffentlichungstag der Anmeldung: 02.05.1997
(73) Patentinhaber: PPS Pipeline Systems GmbH, 49610 Quakenbrück (DE)
(72) Erfinder: Sperling, Hartmut, 49626 Berge (DE); Buhmann, Heinrich, 29313 Hambühren (DE)
(74) Vertreter: Köckeritz, Günter

(56) Entgegenhaltungen:
- EP-A- 0 607 750
- EP-A- 0 653 585
- US-A- 4 505 127
- US-A- 4 527 600
- US-A- 5 238 030
- US-A- 5 333 465
- US-A- 5 351 726
- US-A- 5 370 159
- ZWEMMER, A.J.: "Factors influencing the use of CNG as an automotive fuel." 1986 , SULZER BURCKHARDT, NATURAL GAS DEPARTMENT , BASEL (CH) XP002024651 * das ganze Dokument *

## Beschreibung

Die Erfindung betrifft ein Messsystem für eine stationäre Betankungsanlage, insbesondere für erdgasbetriebene Kraftfahrzeuge.

Der Verbrauch an Erdgas als relativ zu anderen Energieträgern umweltverträglicher Primärenergie nimmt in Europa und insbesondere in Deutschland immer mehr zu. Damit verbunden sind Anstrengungen, Erdgas auch als Kraftstoff im Kraftfahrzeugverkehr einzusetzen. Dabei wird Erdgas unter hohem Druck als "compressed natural gas" (CNG) in die Tanks der Fahrzeuge eingebracht. Der Übergang aus einer Gaspipeline in den Tank eines Kraftfahrzeuges stellt hohe technische Anforderungen an eine derartige Betankungsanlage, insbesondere für die schnelle Betankung von Fahrzeugflotten im Personennahverkehr, die in der Regel innerhalb kurzer Zeit vollgetankt werden müssen.

Es sind Gasbetankungsanlagen, insbesondere für CNG, bekannt, die im Wesentlichen aus einer Gasanschlussleitung, einer Verdichtereinheit, einem Speicher und einer Zapfstelle bestehen, wobei der oberirdische Speicher als Dreibanksystem mit kleinen Druckflaschen, also insgesamt geringem Volumen und maximal 250 bar Fülldruck, ausgerüstet sind und einer Verdichtereinheit, die aus einem Kompressor besteht, der in einer Stunde eine Leistung abgibt, die in etwa der in einer Stunde geforderten Spitzenentnahme entspricht.

Nachteil dieser Gasbetankungsanlagen sind vor allem die hohen Betriebskosten, da die Kompressoren in Spitzenlastzeiten hohe Volumina aus dem Gasnetz entnehmen, die hohe Leistungspreise für die Gasentnahme nach sich ziehen. Ein weiterer Nachteil sind die hohen Investitionskosten für große Kompressoreneinheiten. Des Weiteren ist von Nachteil, dass die großen Kompressoren diskontinuierlich betrieben werden müssen, da die kleinen Kompressoren diskontinuierlich betrieben werden müssen, da die kleine Speicherauslegung nicht ausreicht, den Bedarf über einen längeren Zeitraum bzw. größeren Spitzenbedarf zu decken, so dass die Verdichtereinheit eingeschaltet werden muss. Dieses diskontinuierliche Betreiben des Verdichters führt zu einem höheren Verschleiß und höheren Wartungskosten. Von Nachteil ist auch die Verwendung von oberirdischen Speichern, z. B. Flaschenspeichern, da die zulässigen Betriebsdrücke auf 250 bar begrenzt sind und sie gegenüber Unfällen und Gewalteinwirkung nur unzureichend zu schützen sind. Ein wesentlicher Nachteil ist darüber hinaus, dass ein gewisser Anteil an CNG in dem Zapfschlauch der Abgabeeinheit verbleibt, welcher jedoch gemessen und als abgegeben angezeigt wird, obwohl er in der Abgabeeinheit verblieben ist.

Ein Teil der Nachteile wird durch eine Gasbetankungsanlage gelöst, die im Wesentlichen aus einer Gasanschlussleitung, einer Verdichtereinheit, einer Speichereinheit und einer Abgabeeinheit besteht. Mit einer derart ausgestalteten Gasbetankungsanlage ist es möglich, einen kontinuierlichen Betrieb der Verdichtereinheit sicherzustellen, um Wartungskosten und Verschleiß zu minimieren und die Investitionskosten für den Verdichter zu reduzieren. Die Anordnung einer Speichereinheit, die in ihrem Speichervolumen mindestens in etwa dem maximal in 1 Stunde zu entnehmenden Volumen entspricht, stellt in vorteilhafter Weise sicher, dass immer genügend Erdgas für die Betankung zur Verfügung steht. Die Speichereinheit besteht aus einer oder mehreren Großrohrleitungsabschnitten, wobei der Großrohrleitungsabschnitt für einen Druckbereich von 200 bis 400 bar, insbesondere von 250 bis 300 bar, ausgelegt ist. Damit wird in vorteilhafter Weise kostengünstig ein großes Speichervolumen geschaffen, welches geringer Wartungs- und Überprüfungsarbeiten bedarf. Hierdurch wird auch eine hohe Versorgungssicherheit der Gasbetankungsanlage erreicht, da auch bei Ausfall des Verdichters die Betankung über einen längeren Zeitraum aufrechterhalten bleiben kann. Die Speichereinheit ist unterirdisch angeordnet. Dies trägt vorteilhaft zum Schutz vor Unfällen oder äußeren Gewalteinwirkungen bei. Darüber hinaus ist ein zusätzlicher Schutz vor Klimaeinwirkungen, wie z. B. Sonnenstrahlen und Regeneinflüssen, nicht notwendig. Zwischen der Verdichtereinheit und der Gasanschlussleitung sind eine Gaszähleinrichtung und eine Gasreinigungseinrichtung sowie eine Gastrocknungseinrichtung angeordnet. Diese Einrichtungen dienen der Bereitstellung einer für die Verdichtereinheit benötigten Gasqualität. Zwischen der Speichereinheit und der Abgabeeinheit ist eine Hochdruckregelungseinrichtung angeordnet, die aus einem Kugelhahn, einem Filter, einem Vorwärmer, einem Gasdruckregler und mindestens einem Sicherheitsabsperrventil besteht. Durch diese Hochdruckregelungseinrichtung wird das vormals gespeicherte Gas entspannt und ggf. vorgewärmt, so dass es schnell und sicher über die Abgabeeinheit in den Fahrzeugtank eingespeist werden kann. Dabei ist von besonderem Vorteil, dass durch die Entspannung von beispielsweise 350 bar komprimiertem Erdgas auf beispielsweise 200 bar mittels des Gasdruckreglers die Befüllungstemperatur mittels des Vorwärmers optimal geregelt werden kann.

Die Abgabeeinheit der Gasbetankungsanlage ist insbesondere eine Zapfsäule, die aus hintereinander angeordneter Massenmesseinrichtung, Mengenregelventil, mindestens einem Magnetventil, Druckmessumformer sowie einer Abreißkupplung, einer Zapfkupplung und einem Schlauch besteht. Durch das Mengenregelventil wird in vorteilhafter Weise der Betankungsvorgang derart gesteuert, dass keine Stöße auf die Zapfsäule bei Unterbrechung bzw. Beendigung des Betankungsvorganges auftreten. Darüber hinaus reduziert eine derartige Steuerung die Wartungs- und Unterhaltungskosten und sorgt für eine längere Lebensdauer. Durch die Massenmesseinrichtung kann die Tankbefüllzeit variabel gewählt werden. Über das eine Magnetventil kann die Entspannung der Zapfschläuche gesteuert werden. Auch kann in vorteilhafter Weise der Gasdurchfluss in Kilogramm sowie der Füllfortschritt gemessen werden.

Die Hochdruckregelungseinrichtung zwischen der Speichereinheit und der Abgabeeinheit wird in diesem Beispiel pneumatisch betrieben. Dies hat den Vorteil, dass der Befüllungsvorgang auch bei Ausfall des Stromnetzes weiter betrieben werden kann.

Die Großrohrleitungsabschnitte weisen bei dieser Gasbetankungsanlage eine Nennweite von 800 mm und einen zulässigen Betriebsdruck von 350 bar auf, wobei in besonders vorteilhafter Weise Rohrleitungsabschnitte zwischen 5 und 100 m Länge eingesetzt werden. Dereartige Großrohrleitungsabschnitte können aus Standardelementen zusammengesetzt werden, was sich günstig auf die Investitionskosten auswirkt. Allerdings besteht auch bei dieser Gasbetankungsanlage der Nachteil, dass der schon gemessene CNG-Anteil im Zapfschlauch als abgegeben angezeigt wird, obwohl er nicht in das betankte Fahrzeug gelangt ist.

Aufgabe der Erfindung ist es, ein Messsystem anzugeben, das die in der Abgabeeinheit verbliebene Gasmenge ermittelt und die abgegebene Gasmenge korrekt anzeigt. Die Aufgabe wird durch die Merkmale des Anspruches 1 gelöst. Weitere vorteilhafte Ausgestaltungen sind in den Unteransprüchen angegeben.

Das erfindungsgemäße Messsystem einer Abgabeeinheit einer Gasbetankungsanlage, insbesondere einer CNG-Tankstelle, besteht aus einer Anschlussverbindung, Leitungsabschnitten zwischen Anschlussverbindung und Mengenregelventil sowie zwischen Mengenregelventil und Zapfkupplung, mindestens einem Magnetventil, einem Mengenregelventil, einem Drucksensor, welcher insbesondere hinter dem Mengenregelventil angeordnet ist, einer Massenmesseinrichtung und einer Zapfkupplung, wobei wenigstens ein Temperatursensor und wenigstens ein Drucksensor vor dem Mengenregelventil, vorzugsweise vor dem Magnetventil, und mindestens ein weiterer Temperatursensor hinter dem Mengenregelventil angeordnet sind, wobei die Temperatursensoren, die Drucksensoren, das Mengenregelventil und die Massenmesseinrichtung mit Eingängen eines Prozessrechners verbunden sind und mit dessen Ausgang eine Anzeigeeinheit verbunden ist. Vorteil eines derartigen Messsystems ist, dass permanent die Parameter für die Ermittlung der in den Leitungsabschnitten verbliebenen Gasmenge ermittelt werden und über den Prozessrechner eine Korrektur errechnet werden kann, welche an die Anzeigeeinheit weitergeleitet wird. Dadurch kann die wahre Betankungsmenge angegeben und einem betankten Fahrzeug zugerechnet werden.
Statt eines Magnetventils können auch andere Absperrvorrichtungen Verwendung finden.
Das Mengenregelventil ist über den Prozessrechner mit der Massenmesseinrichtung verbunden. Damit wird vorteilhaft erreicht, dass der in den Tank des zu betankenden Fahrzeuges fließende Gasvolumenstrom reguliert werden kann. Darüber hinaus dient dieses Regelventil zur Einhaltung des eichfähigen Bereiches der Massenmesseinrichtung hinsichtlich des Druckes und der durch die Leitung fließenden Masse. Im Übrigen kann damit auch ein Schlagen des Schlauches bzw. der Zapfsäule wirkungsvoll verhindert werden.

In der Umgebung eines Leitungsabschnittes der Abgabeeinheit ist zur Messung der Umgebungstemperatur ein Temperatursensor angeordnet, der mit einem Eingang des Prozessrechners verbunden ist. Dies dient dazu, die Temperaturschwankungen der Außenluft zu erfassen und in die Korrektur der Betankungsmenge einfließen zu lassen.

Die Anzeigeeinheit besteht aus einer Anzeige für die getankte Gasmenge, insbesondere in Kilogramm, und/oder dem Betrag, und/oder dem Preis/Masseneinheit, und/oder dem Stand der Betankung, z. B. in "%". Eine derartige Anzeige dient der Information über die getankte Gasmenge und sich daraus ergebender Kosten.

Anhand der Zeichnungen soll ein Ausführungsbeispiel näher erläutert werden. Dabei zeigt:
- Fig. 1: zunächst ein Fließbild einer kompletten Gasbetankungsanlage und
- Fig. 2: das Fließschema einer erfindungsgemäßen Abgabeeinheit einer Gasbetankungsanlage.

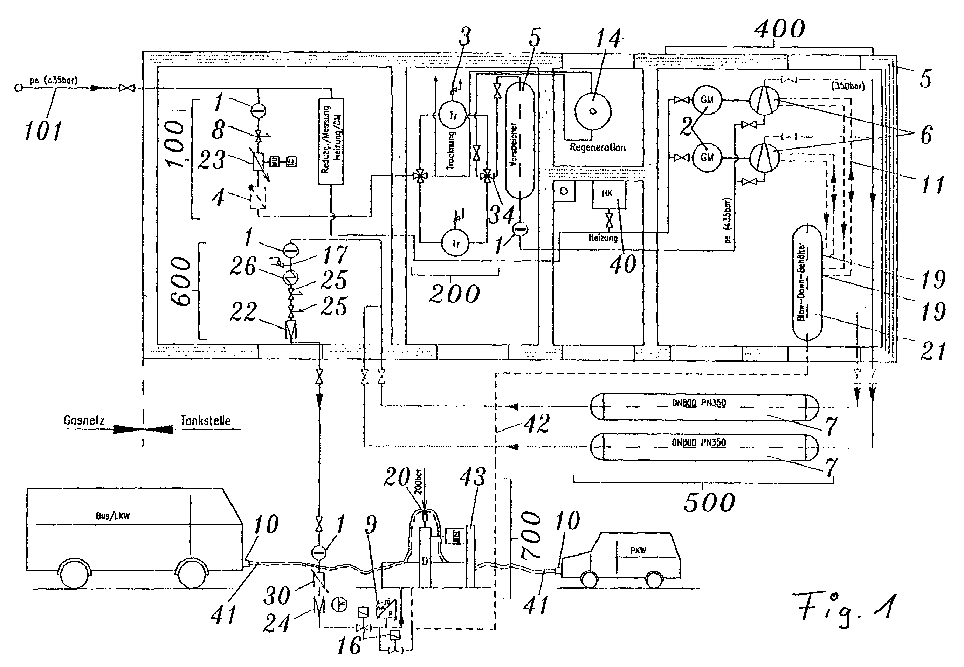

Fig. 1 zeigt ein Ausführungsbeispiel einer kompletten Gasbetankungsanlage mit einer Gasanschlussleitung 101, der Gaszähleinrichtung 100, mit der Gastrocknungseinrichtung 200, der Verdichtereinheit 400, der Speichereinheit 500, der Hochdruckregelungseinrichtung 600 sowie der Abgabeeinheit 700. Dabei sind mit Ausnahme der Abgabeeinheit 700 mit der Zapfsäule 43 und der Speichereinheit 500 alle übrigen Anlageteile in dem Gebäude 45 untergebracht.

Die Gaszähleinrichtung besteht im Wesentlichen aus einem Staubfilter 1, einem dahinter geschalteten Sicherheitsabsperrventil mit Fenrauslösung 8 sowie einem Gaszähler mit Rücklaufsperre 23, an dem ein Mengenumwerter und Tarifgerät angeschlossen sind. Vor der nächsten Einheit, der Gastrocknungseinrichtung 200 ist eine Rückschlagklappe 4 angeordnet, falls der Gaszähler nicht mit einer Rücklaufsperre auszurüsten ist. In der Gastrocknungseinrichtung 200 wird das feuchte Gas in der Trocknung 3 getrocknet, über Umschaltventile bzw. Vierwegehähne 34 ist eine Regenerationseinrichtung 14 mit Gebläse, Lufterhitzer, Kühler und Wasserabscheider sowie einer Steuerung angeschlossen. In dieser Ausführung arbeitet der Trockner nach dem Prinzip der dynamischen Adsorption. Andere Ausführungen der Gastrocknungseinrichtung 200 sind jedoch ebenfalls möglich. Das trockene Gas verlässt die Gastrocknungseinrichtung 200 und wird in einen Vorspeicher 5 geleitet, der für ein gleichmäßiges Puffervolumen beim Anlauf der Kompressoren der Verdichtereinheit 400 sorgt. Nach Durchlaufen eines Staubfilters 1 strömt das Gas in die Verdichtereinheit 400, die aus einem Verdichter 6, in diesem Fall einem mittels Gasmotor 2 angetriebenen Kompressor, besteht, an den mittels einer Überströmleitung 11 ein Blow-Down-Speicher 21 mit einem Abgang für Entspannungsgase 19 angeschlossen ist. In diesem Beispiel ist die Verdichtereinheit 400 doppelt ausgelegt. Wie in Fig. 1 zu erkennen, wird das Gas, welches in die Verdichtereinheit 400 strömt, in dem dortigen Verdichter 6 von ≤ 35 bar auf einen Druckbereich bis zu 350 bar komprimiert, um danach in zwei Großrohrleitungsabschnitten 7 mit einem Nenndurchmesser von 800 mm und einem Druckbereich von bis zu 350 bar einzutreten. Die Verdichteranlage 6 kann auch als mehrstufiger Kolbenverdichter, der von Elektromotoren betrieben wird, eingesetzt werden. Dabei kann die Abwärme des Verdichters bzw. des Gasmotors über einen Wärmetauscher einer Heizkesselanlage 40 zugeführt werden, um sie für Heizzwecke oder für die Gasvorwärmung zu nutzen. Der Blow-Down-Speicher dient zum Auffangen des Leckgases aus dem Verdichtergehäuse und der Entspannungsgase aus dem Füllanschluss der Zapfstelle der Abgabeeinheit 700. Die Großrohrleitungsabschnitte 7 sind als erdverlegte Röhrenspeicher kathodisch geschützt, so dass äußere, wiederkehrende Prüfungen nicht erforderlich sind. Die Hochdruckregelungseinrichtung 600, die das hochkomprimierte Gas aus der Speichereinheit 500 bezieht, besteht im Wesentlichen aus einem Staubfilter 1, einem Sicherheitsabblaseventil 17, einem dahinterliegenden Vorwärmer 26, einem bzw. zwei dahinterliegenden Sicherheitsabsperrventilen 25 sowie einem Regler 22. Der Vorwärmer 26 dient dazu, das durch die Entspannung entstehende, unter Umständen zu kalte Gas auf eine optimale Betankungstemperatur ggf. vorzuwärmen. Der letzte Teil der Gasbetankungsanlage ist die Abgabeeinheit 700, im Wesentlichen bestehend aus einem Staubfilter 1, einer Massenmesseinrichtung 30, einem Mengenregelventil 24, danach einem Magnetventil 16, einem Druckmessumformer 9, einer dahinter angeordneten Abreisskupplung 20 sowie einer Zapfkupplung 10 und einem sich daran anschließenden Schlauch 41. Vor dem Druckmessumformer 9 und an die Zapfkupplung 10 ist eine Leitung 42 zum Blow-Down-Behälter 21 vorgesehen, die die nach jeder Tankung verbliebene Menge in dem Schlauch in den Blow-Down-Behälter zurückführt und somit den Schlauch entspannt. Das Mengenregelventil 24 dient in Verbindung mit einem Prozessrechner der Steuerung des Betankungsvorganges derart, dass keine Stöße auf die Zapfsäule 43, wie bei einem Scheibenventil, auftreten. Auch wird durch das Mengenregelventil 24 automatisch bei einer 100-%igen Füllung der Betankungsvorgang abgeschlossen. Mit Hilfe der Massenmesseinrichtung 30, die nach dem Coriolis-Prinzip arbeitet, und des Prozessrechners ist die Tankbefüllungszeit variabel einstellbar.Durch das Mengenregelventil 24 kann die Durchflussmenge kontrolliert gesteuert werden, so dass eine Sicherheitsabschaltung zwecks Vermeidung eines zu hohen Durchflusses nicht erforderlich ist. In der Tanksäule wird mit den Anzeigen Durchfluss (z. B. in "kg"), Preis (z. B. in "DM"), Preis/Menge (z. B. in "DM/kg") und der Tankfüllfortschritt (z. B. in "%") angezeigt. Dabei ist die Anzeigeeinheit sowie ein eventuell angebrachter Notschalter sowie ein Start- bzw. Stoppschalter in einer üblichen Zapfstelle angeordnet, wobei zwischen den genannten Einrichtungselementen und der Aufnahmeeinrichtung für die Zapfkupplung bzw. den übrigen Einheiten der Abgabeeinheit 700 ein Abstand von mindestens 200 mm mittels einer Blende bzw. eines Lochgitters voneinander gehalten wird.

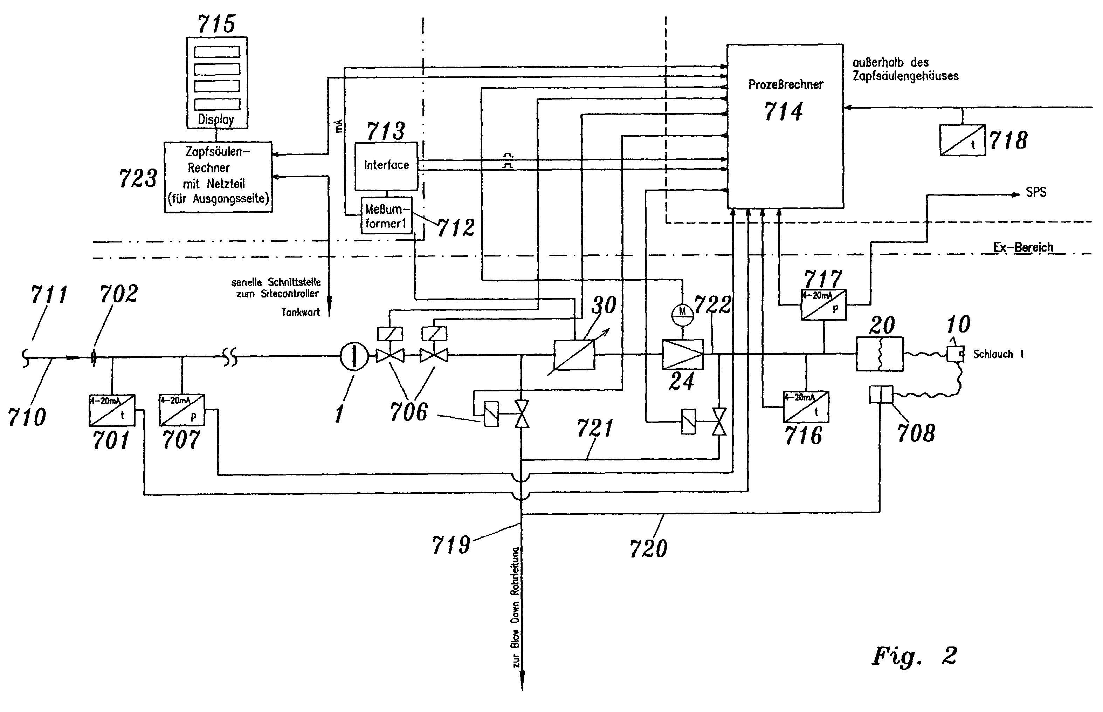

Die Fig. 2 zeigt ein Fließschema einer Abgabeeinheit. Die Anschlussverbindung 711 verbindet den Leitungsabschnitt 710 mit der Speichereinheit oder einem Verdichter, aus dem das abzugebende Gas entnommen wird. In dem Leitungsabschnitt 710 zwischen der Anschlussverbindung 711 und einem Magnetventil 706 ist ein Temperatursensor 701 wie auch ein Drucksensor 707 angeordnet, der die Parameter in diesem Leitungsabschnitt misst und die gemessenen Werte an einen Prozessrechner 714 als Rechen- und Auswerteeinheit weitergibt. Optional kann in diesem Leitungsabschnitt auch ein Staubfilter 1 wie auch ein Isolierflansch 702 angeordnet sein.

Zwischen dem Magnetventil 706 und der Zapfkupplung 10 des Leitungsabschnittes 722 befinden sich des Weiteren eine Massenmesseinrichtung 30, die als Durchflusszähler fungiert. Ein Mengenregelventil 24, ein weiterer Temepratursensor 716 und ein Drucksensor 717, die ebenfalls mit dem Prozessrechner verbunden sind, sowie eine Abreißkupplung 20 befinden ebenfalls in dem Leitungsabschnitt 722. Das Mengenregelventil 24, welches die Gasmasseneinspeisung in den Tank kontrolliert und das Massenmessgerät 30 in seinem geeichten Bereich hält, ist mit einem Messumformer 712 verbunden, der eine Impulsvervielfachung vornimmt. Diese Impulse werden über das Interface 713 auch an den Prozessrechner 714 gegeben. Der eichfähige Bereich des Massenmessgerätes 30 liegt z. B. im Druckbereich zwischen 100 und 250 bar und einer Durchflussmasse von zwischen 1 und 100 kg. Die Entspannung des Leitungsabschnittes 722 geschieht insbesondere über die Leitungen 719 und 721, die der Zapfkupplung 10 über die Leitung 720. Alternativ kann eine Entspannung nur durch eine der Leitungen 719, 720, 721 erfolgen.

Das Verfahren zur Messung der Abgabemenge einer Betankungseinheit ist dadurch gekennzeichnet, dass die mittels Massenmesseinrichtung 730 ermittelte Durchflussmenge kontrolliert wird. Diese Korrektur findet dadurch statt, dass von der Durchflussmasse bzw. -menge die zwischen Mengelregelventil 24 und Zapfkupplung 10 sowie die zwischen Mengenregelventil 24 und Magnetventil 706 befindliche Masse von der ermittelten Durchflussmasse subtrahiert wird. Um die Masse in den gegebenen Volumina zu bestimmen, werden in dem Leitungsabschnitt 722 zwischen Mengenregelventil 724 und Zapfkupplung 710 Temperatursensoren 716 und Drucksensoren 717 angeordnet, um die für die Korrektur notwendigen Parameter Druck und Temperatur zu ermitteln. Des Weiteren befinden sich mindestens ein weiterer Drucksensor 707 wie auch ein weiterer Temperatursensor 717 vor dem Mengenregelventil 24, insbesondere in dem Leitungsabschnitt 710, um aus den damit gemessenen Parametern Druck und Temepratur und dem Volumen dieses Leitungsabschnittes die korrekte Betankungsmenge bzw. -masse zu ermitteln. Die Ermittlung der beiden Massen in dem Leitungsabschnitt 722 und die Korrektur der Durchflussmasse erfolgt in sehr schneller Taktfolge im Prozessrechner 714 und das Ergebnis wird in entsprechendem Takt an die Anzeigeeinheit 715 weitergeleitet.

Das Messverfahren wird beispielhaft in einem Takt von mindestens einer Messung/s durchgeführt. Dies hat den Vorteil, dass eine quasi kontinuierliche Korrektur der Betankungsmenge erreicht wird.

Die in dem Prozessrechner ermittelten Daten werden an den mit dem Prozessrechner 714 verbundenen Zapfsäulenrechner 723 geleitet, welcher mit dem Zapfsäulendisplay 715 verbunden ist. Optional kann auch eine Druckausgabe stattfinden. Der Zapfsäulenrechner 723 führt lediglich die Multiplikation des Preises mit der getankten Masse durch und steuert die Anzeige. In einer weiteren Ausführung entfällt der Zapfsäulenrechner 723; die Daten für die Anzeigeeinheit werden direkt vom Prozessrechner geliefert. Durch den Außentemperatursensor 718 wird ein weiterer, den Gesamtprozess optimierender Parameter gemessen und an den Prozessrechner 714 weiter gegeben. Der Leitungsabschnitt 710 hat in diesem Ausführungsbeispiel eine Länge von 30 m, ist kathodisch geschützt und erdverlegt.

Die Leitungen 719, 720 und 721 führen zu einem Vorspeicher und/oder Blow-Down-Speicher.

Durch dieses Messsystem werden die Fehlertoleranzen bei der Ermittlung der getankten Gasmasse auf ein Minimum beschränkt. Sie betragen in etwa ein Zehntel der derzeit von der Physikalisch-Technischen Bundesanstalt (PTB) zugelassenen Werte.

Die zur Berechnung notwendigen Parameter eines definierten Gases sind gespeichert.

Ein Temperatursensor 701 ist in diesem Ausführungsbeispiel ebenso wie ein Drucksensor 707 zwischen Anschlussverbindung 711 und Magnetventil 706 angeordnet und misst somit den am Magnetventil 706 anstehenden, relativ konstanten Gasdruck und die Gastemperatur. Eine Anordnung dieser beiden Sensoren 701, 707 zwischen Magnetventil 706 und Mengenregelventil 24 wäre zwar technisch möglich, würde aber höhere Anforderungen an die Sensoren bezüglich der Druck- und Temperaturschwankungen stellen.

## Patentansprüche

1. Messsystem einer Abgabeeinheit einer Gasbetankungsanlage, bestehend aus Anschlussverbindung (711), mindestens zwei Leitungsabschnitten (710, 722), mindestens einem in einem Leitungsabschnitt angeordneten Magnetventil (706) sowie einem zwischen den Leitungsabschnitten angeordneten Mengenregelventil (24) und einem Druckmesssensor (717), einer Massenmesseinrichtung (30) und einer am Ende des stromabwärts gelegenen Leitungsabschnittes angeordneten Zapfkupplung (10), wobei wenigstens ein Temperatursensor (701) und wenigstens ein Drucksensor (707) in Strömungsrichtung vor dem Mengenregelventil (24) und dass wenigstens ein Temperatursensor (716) in Strömungsrichtung hinter dem Mengenregelventil (24) angeordnet sind, wobei die Temperatursensoren (701, 716), die Druckmesssensoren (707, 717), das Mengenregelventil (24) und die Massenmesseinrichtung (30) mit Eingängen eines Prozessrechners (714) verbunden sind und mit dessen Ausgang eine Anzeigeeinheit (715) verbunden ist.

2. Messsystem nach Anspruch 1, **dadurch gekennzeichnet, dass** die Massenmesseinrichtung (30) über einen Messumformer (712) mit dem Prozessrechner verbunden ist.

3. Messsystem nach Anspruch 1 oder 2, **dadurch gekennzeichnet, dass** das Mengenregelventil (24) über den Prozessrechner (714) mit der Massenmesseinrichtung (30) verbunden ist.

4. Messsystem nach einem der Ansprüche 1 bis 3,
**dadurch gekennzeichnet, dass**
mindestens ein weiterer Temperatursensor (718), welcher in der Umgebung des Leitungsabschnittes (722) der Angabeeinheit zwecks Messung der Umgebungstemperatur angeordnet ist.

5. Messsystem nach einem der Ansprüche 1 bis 4,
**dadurch gekennzeichnet, dass**
die Anzeigeeinheit aus einer Anzeige für die getankte Gasmenge und/oder für den Stand der Betankung, und/oder den Preis/kg, und/oder den Zahlbetrag besteht.

6. Messsystem nach einem der Ansprüche1 bis 5,
**dadurch gekennzeichnet, dass**
der Temperatursensor (701) und der Drucksensor (707) zwischen Anschlussverbindung (711) und Magnetventil (706) angeordnet sind.

## Claims

1. Measuring system for a discharge unit of a gas filling plant, comprising a terminal connection (711), at least two line portions (710, 722), at least one solenoid valve (706) disposed in a line portion, as well as a quantity regulating valve (24), disposed between the line portions, and a pressure measuring sensor (717), a mass measuring means (30) and a pin-type coupling (10) disposed at the end of the downstream line portion, wherein at least one temperature sensor (701) and at least one pressure sensor (707) are disposed upstream of the quantity regulating valve (24), when viewed with respect to the flow direction, and at least one temperature sensor (716) is disposed downstream of the quantity regulating valve (24), when viewed with respect to the flow direction, wherein the temperature sensors (701, 716), the pressure measuring sensors (707, 717), the quantity regulating valve (24) and the mass measuring means (30) are connected to inputs of a process computer (714), and wherein a display unit (715) is connected to the output of said computer.

2. Measuring system according to claim 1, **characterised in that** the mass measuring means (30) is connected to the process computer via a measuring transducer (712).

3. Measuring system according to claim 1 or 2, **characterised in that** the quantity regulating valve (24) is connected to the mass measuring means (30) via the process computer (714).

4. Measuring system according to one of claims 1 to 3, **characterised in that** at least one additional temperature sensor (718) is provided, which is disposed in the region of the line portion (722) of the discharge unit for the purpose of measuring the ambient temperature.

5. Measuring system according to one of claims 1 to 4, **characterised in that** the display unit comprises a display for the filled gas quantity and/or for the state of the filling, and/or for the price/kg, and/or for the counted amount.

6. Measuring system according to one of claims 1 to 5, **characterised in that** the temperature sensor (701) and the pressure sensor (707) are disposed between the terminal connection (711) and the solenoid valve (706).

## Revendications

1. Système de mesure d'une unité de distribution d'une installation de ravitaillement en gaz, comprenant un raccordement (711), au moins deux sections de conduite (710, 722), au moins une électrovanne (706) disposée dans une section de conduite, ainsi qu'une soupape de régulation de débit (24), disposée entre les sections de conduite, et un capteur de pression (717), un appareil de mesure de masse (30), et un accouplement de tuyau distributeur (10) disposé sur l'extrémité de la section de conduite aval, au moins un capteur de température (701) et au moins un capteur de pression (707) étant disposés dans le sens d'écoulement en amont de la soupape de régulation de débit (24), et au moins un capteur de température (716) étant disposé dans le sens d'écoulement en aval de la soupape de régulation de débit (24), les capteurs de température (701, 716), les capteurs de pression (707, 717), la soupape de régulation de débit (24), et l'appareil de mesure de masse (30), étant reliés aux entrées d'un ordinateur industriel (714), et une unité d'affichage (715) étant reliée à la sortie de ce dernier.

2. Système de mesure suivant la revendication 1, **caractérisé en ce que** l'appareil de mesure de masse (30) est relié à l'ordinateur industriel par l'intermédiaire d'un convertisseur de mesure (712).

3. Système de mesure suivant l'une des revendications 1 et 2, **caractérisé en ce que** la soupape de régulation de débit (24) est reliée à l'appareil de mesure de masse (30) par l'intermédiaire de l'ordinateur industriel (714).

4. Système de mesure suivant l'une des revendications 1 à 3, **caractérisé en ce qu'**au moins un autre capteur de température (718) est disposé aux alentours de la section de conduite (722) de l'unité de distribution afin de mesurer la température ambiante.

5. Système de mesure suivant l'une des revendications 1 à 4, **caractérisé en ce que** l'unité d'affichage se compose d'un affichage pour la quantité de gaz emplie et/ou pour l'état du remplissage et/ou le prix/kg et/ou le montant à payer.

6. Système de mesure suivant l'une des revendications 1 à 5, **caractérisé en ce que** le capteur de température (701) et le capteur de pression (707) sont disposés entre le raccordement (711) et l'électrovanne (706).
